(19)

Europäisches
Patentamt
European
Patent Office
Office européen
des brevets

(11) **EP 1 801 394 A1**

(12) **EUROPEAN PATENT APPLICATION**

(43) Date of publication:
**27.06.2007 Bulletin 2007/26**

(51) Int Cl.:
***F02D 41/00*** *(2006.01)*

(21) Application number: **05112713.2**

(22) Date of filing: **22.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Inergy Automotive Systems Research (SA)**<br>**1120 Bruxelles (BE)** | (72) Inventor: **The designation of the inventor has not yet been filed**<br><br>(74) Representative: **Jacques, Philippe et al**<br>**Solvay S.A.**<br>**Département de la Propriété Industrielle,**<br>**Rue de Ransbeek, 310**<br>**1120 Bruxelles (BE)** |

(54) **Method for the onboard determination of the volatility of a fuel**

(57)    Method for the determination of the volatility of a fuel stored in a fuel tank which is part of a fuel system controlled by a fuel system control unit (FSCU) and comprising pressure, temperature and fuel level sensors, according to which the FSCU uses the ideal gas law and measurements performed by the sensors in order to predict the distillation curve and/or the Driveability Index (DI) of the fuel; use of said method for adjusting the amount of fuel to be injected in a mixing chamber of an internal combustion engine of a motor vehicle. The gas law is used at two temperatures to calculate the number of moles of fuel as points on the distillation curve, and interpolation.

**EP 1 801 394 A1**

Printed by Jouve, 75001 PARIS (FR)

**Description**

TECHNICAL FIELD

The present invention relates to a method for the onboard determination of the volatility of a fuel.

BACKGROUND

It is known in the art relating to automotive engines, that a key gasoline characteristic for good driveability is volatility. Volatility is especially important at the time an engine is started because liquid gasoline must evaporate and mix with air to form a combustible mixture. The above discussed volatility has a direct incidence on the air/fuel ratio injected in the engine cylinders since if too little gasoline is added (evaporated), the engine will not start; and if gasoline beyond that needed to initiate combustion is added (evaporated), then extra hydrocarbons from an unburned portion of gasoline are found in the exhaust. In order to be sure the engine starts in any conditions with any fuel, current engines start with an excess of fuel (towards the stoichiometric value, which is an air/fuel ratio of 14.7:1) i.e. with a "rich" mixture (air/fuel ratio of about 11.5:1).

To describe the effect of gasoline volatility on the cold start and warm-up driveability of a vehicle, a driveability index (DI) has been developed. DI is a measure of volatility that was developed to help predict how different volatility gasoline types affect engine performance and is correlated to how often an engine might stall, stumble, surge or hesitate.

For gasoline that does not contain oxygenates, such as ethanol or methyl tertiary-butyl ether (MTBE), the defmition of the DI is based on a laboratory test (American Society for Testing and Materials D 86) in which a sample of gasoline is distilled as the temperature of the sample is raised. In this test, the fraction distilled is measured as a function of temperature and the DI is then calculated according to the following formula :

$$DI = 1.5 T_{10} + 3 T_{50} + T_{90} \quad (1)$$

where $T_x$ is the temperature in degrees Fahrenheit at which x % of the gasoline sample has been distilled. These 3 temperatures are in fact taken on the distillation curve of the fuel.

For oxygenated fuels, a New Driveability Index (NDI) has been found to give better correlation to engine performance; it answers the following formula :

NDI = DI + 43.2 $\delta$(MTBE) + 86.2 $\delta$(ETOH) (2) where $\delta$(MTBE) and $\delta$(ETOH) are equal to 1 if about 15% MTBE or 10% ethanol are present respectively, and equal to zero otherwise.

In practice, there is no need to know the DI (i.e. 3 points of the distillation curve) to improve cold start performance of the engine. It is namely so that $T_{10}$ is in practice equal to about 104°F (40°C) so that it is sufficient to know the lower part of the distillation curve of the fuel. Moreover, since this part of the curve is very close to linear, it is in fact sufficient to know the volatility of the fuel at 2 different low temperatures. The differential between the actual curve and a linear representation is very small. When the mechanical inefficiencies of the engine are included during this event, they far over shadow the difference in the 2 curves.

PRIOR ART

US 6,880,392 patent reveals an on-board system and method for determining an approximation of the volatility of fuel based on the measurement of the fuel volatility at one temperature and on specific algorithms. Said system/ method uses a dedicated capacitive sensor of the interdigitated type, which adds costs to the vehicle fuel system.

SUMMARY OF THE INVENTION

To solve this problem, applicant's invention relates to a system using existing technology, i.e. current sensors in the vehicle with no need for any additional sensors, or devices. It does not require any additional devices, volumes, or changes to the normal day to day operation of the vehicles. With the help of an intelligent fuel system or IFS (i.e. a fuel system comprising a fuel system control unit (FSCU) and data network connection), a first measurement of the evaporated fraction can be made during fuel fill (to get a first point of the curve); then, the tank is sealed and a second measurement is made after running a while, at higher pressure and temperature (to get a second point of the curve). A DI value can be predicted which will allow Engine Control Unit (ECU) calibrations to run at a leaner state than previously capable (i.e. with less fuel excess).

DESCRIPTION OF THE INVENTION

Hence, the present invention relates to a method for the determination of the volatility of a fuel stored in a fuel tank which is part of a fuel system controlled by a fuel system control unit (FSCU) and comprising pressure, temperature and fuel level sensors, according to which the FSCU uses the ideal gas law and measurements performed by the sensors in order to predict the distillation curve and/or the Driveability Index (DI) of the fuel.

More specifically, the present invention relates to a method wherein the fuel system comprises a venting line communicating with the fuel tank by means of at least one venting valve and a refilling event sensor, said method comprising the steps of

  a. sensing the end of a refilling event using the refilling event sensor;
  b. closing the venting valve so that no gas can escape the fuel tank;
  c. measuring and recording the temperature, pressure and fuel level using the FSCU;
  d. computing the number of moles ($n_0$) of fuel evaporated at the refilling temperature ($T_0$) using the above measured values and an algorithm stored in the FSCU, to get a first point of the distillation curve;
  e. measuring and recording again the temperature, pressure and fuel level after a while, when the fuel has reached a higher temperature ($T_1$) and when the engine is running in a non-purge event;
  f. computing the number of moles ($n_1$) of fuel evaporated at said higher temperature ($T_1$) to get a second point of the distillation curve;
  g. computing at least part of the distillation curve ($f_x$ as a function of $T_x$, where $f_x$ is the fraction of fuel evaporated at the temperature $T_x$) of the stored fuel using the 2 measured/computed points (i.e. ($f_0$, $T_0$) and ($f_1$, $T_1$));
  h. storing said curve.

The fuel tank of the invention is preferably part of a fuel system comprising an evaporative emission control system which aims at controlling the emission of fuel vapour generated in the fuel tank. This system generally comprises a fuel vapour canister that captures fuel vapour which is subsequently supplied to an engine air intake system through a purge valve; a venting line equipped with at least one venting valve (generally a roll-over-valve) and communicating the fuel tank with the fuel vapour canister; and a purge valve. The purge valve, normally closed, is located between the canister and the engine, and is modulated to draw the vapour out of the canister for ingestion in the engine intake system.

Preferably both venting valve and purge valve are solenoid valves which are controlled by the FSCU.

In general the fuel system comprises other components like a fuel pump which draws fuel from the fuel tank and discharges fuel from the fuel tank through an opening in the fuel tank wall.

The FSCU can manage the operating conditions and functioning parameters of the fuel system and preferably, of all its components. The FSCU generally

  • has means for controlling functions of the fuel system,
  • is connected with at least one fuel system component (and preferably, with all) to send signals or receive signals from said at least one fuel system component,
  • is connected with at least one sensor that sends signals to an engine control unit (ECU),
  • is adapted to electronically and bi-directionally communicate with the ECU.

The FSCU preferably is a standalone controller, different from the ECU and which has taken over the control of the fuel system from the ECU, i.e. the ECU doesn't directly control the fuel system. The FSCU may receive information from and send information to a plurality of vehicle control systems including the ECU through a limited number of wires, or buses (i.e. CAN, LIN). The information exchanged between the FSCU and the ECU includes for instance the quantity of fuel in the fuel tank (returned from the fuel level sensor), the injector pulse width (indicating how much fuel has to be injected), and a signal indicating if purge conditions for the canister are met ...

The FSCU preferably controls the operation of all components integrated in the fuel system during normal and transient operating conditions of the engine, receives data on the operating parameters and sends information to make the component function. In general this control was previously made by the ECU or by component-dedicated electronic controllers (for instance, specific controllers exist for fuel pump management).

According to the invention, the FSCU is electronically connected to sensors integrated in the fuel system. Among fuel system sensors there are generally an electronic fuel level sensor, a temperature sensor, an analogue pressure sensor, a hydrocarbon vapour sensor. Other types of sensors can be part of this list. They are connected to the FSCU by appropriate electric wires through which sensors transmit data to the FSCU.

According to the invention, the FSCU comprises a sensor for providing indication of a refuelling event of the fuel tank and more specifically, of the end of a refuelling (refilling) event. This sensor might be the fuel level gauge. Preferably, said sensor comprises a switch or relay on the fuel door and/or on a capless filler head, if any. It preferably also comprises an engine ignition state sensor.

Once the end of a refuelling event (or fill event) is sensed (step a. of the process, the tank is sealed i.e. the venting valve is closed so that no gas can escape from the tank (step b. of the process). Then, according to the invention, the FSCU measures and stores the temperature, pressure and fuel level (step c of the process). The FSCU then monitors the temperature inside the fuel tank and when it reaches a higher temperature (T1) and the engine runs a non purge-event, it measures and stores again said temperature, pressure and fuel level inside the tank (step e. of the process).

According to the invention, the FSCU computes :

- the number of mole n0 of fuel evaporated at the filling temperature T0 (step c. of the process which may be performed either right after step b. or together with step f.); and
- the number of moles n1 of fuel evaporated when the fuel reached temperature T1 (step f. of the process).

Based on these calculations, the FSCU predicts at least part of the distillation curve of the fuel (i.e. fx as a function of Tx where fx is the fraction of fuel evaporated at a temperature Tx) and stores said curve in its memory (steps g. and h. of the process).

Preferably, the temperature and pressure mentioned above are those in the vapour dome.

The base for all calculations actually is the ideal gas law : pV = nRT. In that regard, it is worth noting that assuming that nR is a constant in the system, an indirect value of the fuel level may be calculated, which in turn allows for a more controlled calculation of in-tank events.

The tank needs to be sealed in the above described method, for reasons that are two fold; first it allows for a faster generation of vapor and to reach an equilibrium state, and second it makes for a more accurate measure of the fuel that the engine is actually getting for consumption. For example, all the light ends of the fuel have already vaporized and are in the carbon canister. The tank is not sealed during the fuelling event. And the port to the carbon canister is open. The vapor flows into there. Directly after the event, we close the tank and take the measurements at time point zero. Closing the tank to venting induces an enclosed "vapour trap". In this situation the ideal gas law can be used for the calculations, while any volume changes can be captured through the knowledge of fuel consumption. The change in the number of moles (n) between the 2 measurements helps with the calculation of the DI and/or the distillation curve.

According to a preferred embodiment of the present invention, the distillation curve is computed by linear extrapolation of the 2 available points. This is often enough to help enhancing the engine's performance at cold starts.

In fact, 3 kinds of fuel are mainly available, which have different distillation curves and DI : summer and winter conventional fuels, and oxygenated fuels. Accordingly, a master curve for each kind of fuel may be stored within the system and according to a preferred embodiment of the present invention, the extrapolated distillation curve is compared with said master distillation curves and based thereon, the FSCU predicts a DI value. As explained earlier, the aim of knowing the volatility of the fuel as a function of temperature (i.e. the distillation curve) or the DI is to be able to feed the right amount of fuel to the engine cylinders (via a mixing or injection chamber; this used to be the carburettor, but in modern cars, it generally is a chamber in the injection system).

Therefore, the invention also concerns a method for adjusting the amount of fuel to be injected in a mixing chamber of an internal combustion engine of a motor vehicle, said method comprising the steps of

- determining the distillation curve and/or the DI of the fuel using the method described above;
- adjusting the amount of fuel to be injected in the mixing chamber as a function of the temperature inside the mixing chamber according to said distillation curve and/or DI.

According to this aspect of the invention, the FSCU advantageously communicates with the ECU in order to provide it with the volatility information it stored. This communication preferably happens via a vehicle bus (i.e. CAN, LIN) since this communication medium is less sensitive to electronic bugs.

Having received information on the volatility of the fuel from the FSCU, and knowing the required air/fuel ratio to be fed to the engine, the ECU can calculate the amount of fuel to be injected in the mixing chamber as a function of the temperature in said mixing chamber.

According to an embodiment of the present invention, the FSCU categorizes the fuel in one of 3 fuel kinds (fuel type 1, 2 or 3) corresponding respectively to low DI fuels (1), nominal DI fuels (2), and high DI fuels (3) As an example : if the DI calculation has a value of about 850-975 that would be a 1 value, 976-1125 would be a 2 value, and 1126-1400 would be a 3 value. This value would be sent to the ECU, which would then modify the fuel supply curves based on this. So, for a 2 value (nominal) it would run a curve about 13:1 Air/fuel ratio at start up. For a 3 value (high DI, which is harder to light off) it would run about a 12.5:1 Air/fuel ratio curve.

**Claims**

1. - Method for the determination of the volatility of a fuel stored in a fuel tank which is part of a fuel system controlled by a fuel system control unit (FSCU) and comprising pressure, temperature and fuel level sensors, according to which the FSCU uses the ideal gas law and measurements performed by the sensors in order to predict the distillation curve and/or the Driveability Index (DI) of the fuel.

2. - Method according to the preceding claim, wherein the fuel system comprises a venting line communicating with the fuel tank by means of at least one venting valve and a refilling event sensor, said method comprising the steps of

   a. sensing the end of a refilling event using the refilling event sensor;
   b. closing the venting valve so that no gas can escape the fuel tank;
   c. measuring and recording the temperature, pressure and fuel level using the FSCU;
   d. computing the number of moles ($n_0$) of fuel evaporated at the refilling temperature ($T_0$) using the above measured values and an algorithm stored in the FSCU, to get a first point of the distillation curve;
   e. measuring and recording again the temperature, pressure and fuel level after a while, when the fuel has reached a higher temperature ($T_1$) and when the engine is running in a non-purge event;
   f. computing the number of moles ($n_1$) of fuel evaporated at said higher temperature ($T_1$) to get a second point of the distillation curve;
   g. computing at least part of the distillation curve ($f_x$ as a function of $T_x$, where $f_x$ is the fraction of fuel evaporated at the temperature $T_x$) of the stored fuel using the 2 measured/computed points (i.e. ($f_0$, $T_0$) and ($f_1$, $T_1$));
   h. storing said curve.

3. - Method according to the preceding claim, **characterized in that** the distillation curve is computed by linear extrapolation of the 2 available points.

4. - Method according to the preceding claim, **characterized in that** the distillation curve is compared with master distillation curves stored in the FSCU and **in that** based thereon, the FSCU predicts a DI value.

5. - Method for adjusting the amount of fuel to be injected in a mixing chamber of an internal combustion engine of a motor vehicle, said method comprising the steps of

   • determining the distillation curve and/or the DI of the fuel using a method according to any of the preceding claims;
   • adjusting the amount of fuel to be injected in the mixing chamber as a function of the temperature inside the mixing chamber according to said distillation curve and/or DI.

6. - Method according to the preceding claim, wherein the engine has a control unit (ECU) which calculates the required air/fuel ratio to be fed to the engine and wherein the amount of fuel injected in the mixing chamber is adapted by the ECU in function of the temperature in said mixing chamber and according to the information on the distillation curve and/or DI it receives from the FSCU.

7. - Method according to claim 5 or 6, wherein the FSCU categorizes the fuel in one of 3 fuel kinds (fuel type 1, 2 or 3) corresponding respectively to low DI fuels (1), nominal DI fuels (2), and high DI fuels (3) and that this information is sent to the ECU, which modifies the fuel supply curves based on this information.

## EUROPEAN SEARCH REPORT

**European Patent Office**

**Application Number**

EP 05 11 2713

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/224055 A1 (WIESE MATTHIAS ET AL) 13 October 2005 (2005-10-13) * abstract * * paragraphs [0028] - [0044] * * claim 1 * | 1,5 | F02D41/00 |
| D,A | EP 1 363 004 A (DELPHI TECHNOLOGIES, INC) 19 November 2003 (2003-11-19) * abstract * * paragraphs [0013] - [0015] * * figures * | | |
| A | PATENT ABSTRACTS OF JAPAN vol. 1997, no. 07, 31 July 1997 (1997-07-31) & JP 09 072252 A (UNISIA JECS CORP), 18 March 1997 (1997-03-18) * abstract * | | |
| A | EP 1 178 203 A (GENERAL MOTORS CORPORATION) 6 February 2002 (2002-02-06) * abstract * | 5 | TECHNICAL FIELDS SEARCHED (IPC) F02D |
| A | WO 2005/103477 A (INERGY AUTOMOTIVE SYSTEMS RESEARCH ; HILL, DAVID; MCCLEARY, RYAN) 3 November 2005 (2005-11-03) * abstract * | | |
| A | US 6 176 222 B1 (KIRWAN JOHN E ET AL) 23 January 2001 (2001-01-23) * abstract * | | |

The present search report has been drawn up for all claims

| Place of search | Date of completion of the search | Examiner |
|---|---|---|
| The Hague | 16 February 2006 | Trotereau, D |

EPO FORM 1503 03.82 (P04C01)

EP 1 801 394 A1

## ANNEX TO THE EUROPEAN SEARCH REPORT
## ON EUROPEAN PATENT APPLICATION NO.

EP 05 11 2713

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2006

| Patent document cited in search report | | Publication date | Patent family member(s) | | Publication date |
|---|---|---|---|---|---|
| US 2005224055 | A1 | 13-10-2005 | WO | 03087560 A1 | 23-10-2003 |
| | | | DE | 10217379 A1 | 13-11-2003 |
| | | | EP | 1495219 A1 | 12-01-2005 |
| EP 1363004 | A | 19-11-2003 | US | 2003213293 A1 | 20-11-2003 |
| JP 09072252 | A | 18-03-1997 | NONE | | |
| EP 1178203 | A | 06-02-2002 | JP | 3561489 B2 | 02-09-2004 |
| | | | JP | 2002081343 A | 22-03-2002 |
| | | | US | 6360726 B1 | 26-03-2002 |
| WO 2005103477 | A | 03-11-2005 | NONE | | |
| US 6176222 | B1 | 23-01-2001 | NONE | | |

EPO FORM P0459

For more details about this annex : see Official Journal of the European Patent Office, No. 12/82

7

**EP 1 801 394 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6880392 B